# EUROPEAN PATENT SPECIFICATION

(11) **EP 3 473 874 B1**
(45) Date of publication and mention of the grant of the patent: **26.08.2020**
(21) Application number: 17275169.5
(22) Date of filing: 20.10.2017
(51) Int. Cl.: F16C 3/02, B29C 65/64

(54) **SPLINED END FITTINGS**
VERZAHNTE ENDSTÜCKE
RACCORDS D'EXTRÉMITÉ CANNELÉS

(43) Date of publication of application: 24.04.2019
(73) Proprietor: Crompton Technology Group Limited, Solihul, West Midlands B90 4SS (GB)
(72) Inventor: FAULKNER, Dale, Stourbridge, West Midlands DY9 8AH (GB); POLLITT, Will, Kenilworth, Warwickshire CV8 2AJ (GB)
(74) Representative: Dehns

(56) References cited:
- WO-A1-2016/180901
- US-A- 3 584 473

## Description

### Technical Field

The present disclosure relates to splined end fittings, in particular metallic end fittings for tubular components made of fibre reinforced polymer matrix composite material. This disclosure is concerned with splined end fittings that can transmit torsional forces to/from a composite material structural component.

### Background

Composite structural components are typically made of a polymer matrix composite material, often a fibre-reinforced polymer matrix composite material using glass and/or carbon fibre reinforcement, e.g. carbon fibre reinforced polymer (CFRP). Composite structural components offer the opportunity for lightweight and cost effective load transmission solutions. The largest benefits are often achieved when the load path and geometry are simple. Load transmission components, such as drive shafts, rods and struts, are ideal candidates for polymer matrix composite material and such composite structural components are increasingly being used on commercial aircraft in addition to automotive and construction industries. These composite structural components generally require an end fitting having a complex form to interface with other components. Metals are efficient in terms of weight and cost for forming an end fitting having a complex geometry. However, joining a composite structural component to a metallic end fitting in a robust way poses significant challenges, especially in the aerospace industry where the joint must be formed in a certifiable manner.

It is known to form a load bearing end connection for a fibre-reinforced composite material component using a metal insert embedded inside a cylindrical structure made of a polymer matrix composite material. To manufacture such an end connection, the metal insert may be located onto a mandrel and the composite material structure then filament wound over the assembly. Upon curing, the mandrel is removed leaving the metal insert embedded inside the composite material structure. The metal insert may include a threaded bore that provides a mounting point for attaching the end connection to other components for the transmission of generally axial loads. Some examples of such an end connection are seen in EP2229540 and EP3133298.

Many aerospace applications require composite structural components that can transmit rotational movements, i.e. torque, between moving parts (e.g. control surfaces of an aircraft wing). In order to reliably transmit torque, a metallic end fitting must not slip under rotation and should not introduce stresses resulting in gross failure of the composite material component.

US 7,874,925 provides an internally splined metallic end fitting which is press fitted onto the end of a composite torque transmission shaft. The primary load transfer mechanism is made through an interference fit with the external surface of the composite tube and the serrated internal splines that form teeth cutting into the external surface of the composite tube. The splined internal surface is designed to accommodate the resulting composite material debris generated during the press fitting process. To support the torque shaft during the press fitting process, the tube is reinforced by an internal plug of the same composite material that has been wound to have a high hoop strength. The internal plug encourages spline cutting and the correct interference fit at the flat sections between the cutting teeth. WO 2016/180901 discloses a composite drive shaft with an end that is mechanically or thermoplastically deformed to form a polygonal plug, which is connected with an interference fit to a corresponding polygonal socket of an end fitting. This document shows the preamble of appended claim 1.

The present disclosure seeks to provide alternative and improved end fittings.

### Summary

According to the present disclosure there is provided a metallic end fitting for a given tubular component made of fibre reinforced polymer matrix composite material, the end fitting comprising:
first and second concentric surfaces extending longitudinally along a central axis to form a socket for receiving an end of the tubular component;
the socket having an outer diameter defined by the first surface, and an inner diameter defined by the second surface, wherein the outer diameter and inner diameter are chosen to provide an interference fit with respective outer and inner surfaces of the given tubular component when the component is press fitted into the socket;
wherein each of the first and second concentric surfaces comprises one or more longitudinal cutting teeth.

When the given tubular component is press fitted into the socket, the one or more longitudinal cutting teeth are designed to cut one or more longitudinal grooves into respective outer and inner surfaces of the composite material tubular component to form a mechanical locking interface. Thus the installed composite tubular component is cut on both its outer and inner surfaces and an interference fit is generated at both its outer and inner surfaces.

Preferably the one or more cutting teeth comprise a plurality of axial or helical splines.

In some examples the end fitting comprises:
the first surface facing radially inwardly and comprising a plurality of splines extending along the central axis, each spline flanked by a pair of troughs extending along either side of the spline and projecting radially outwardly to a diameter greater than the outer diameter, and each spline projecting radially inwardly from the outer diameter, to form a corresponding plurality of longitudinal cutting teeth, adjacent cutting teeth being spaced apart by lands extending circumferentially at the outer diameter; and/or
the second surface facing radially outwardly and comprising a plurality of splines extending along the central axis, each spline flanked by a pair of troughs extending along either side of the spline and projecting radially inwardly to a diameter less than the inner diameter, and each spline projecting radially outwardly from the inner diameter, to form a corresponding plurality of longitudinal cutting teeth, adjacent cutting teeth being spaced apart by lands extending circumferentially at the inner diameter.

In such examples, the troughs either side of each spline allow for redistribution of the composite section and for the containment of debris composite material formed during the press fitting process. It will be appreciated that the splines of this type of end fitting act to cut grooves into the surfaces of a given tubular component by removing composite material rather than thermoplastically and/or mechanically deforming the composite material.

The double splined arrangement of first and second concentric surfaces removes the need for a separate hoop plug and halves the overall length of the splines, resulting in a significant size reduction in the end fitting. Cylindricity and straightness during assembly of the end fitting may be improved by a single component having the first and second concentric surfaces of the socket, ensuring correct pressure to counteract the pressure exerted by the cutting teeth and interference fit. The mechanical engagement of the first and second surfaces with both outer and inner surfaces of the composite material tubular component means there is engagement with a larger number of fibres, e.g. twice as many, in contrast to a standard splined end fitting where only a single surface forms a mechanical interface. Single splined end fittings are weaker due to shear stresses that develop in the bend at the outmost region of the tube.

Some advantages of an end fitting according to the present disclosure include lighter weight, stronger, easier to manufacture, better material utilization, reduced component count, simplified assembly, and improvements to geometrical alignment. The end fitting may be especially useful in torque applications requiring improved load transfer, for example tubular components used as torque drive shafts. One or more of these advantages may become more apparent from the examples disclosed below.

In a first set of examples, the first and second concentric surfaces are parallel with the central axis. The socket is therefore straight.

In a second set of examples, at least one of the first and second concentric surfaces is angled relative to the central axis. The socket is therefore tapered on one or both of the first and second concentric surfaces. In preferred examples both the first and second concentric surfaces are angled relative to the central axis, preferably at the same angle e.g. to form a symmetrically tapered socket. In such examples the first and second surfaces may both be angled to converge towards the central axis from an open end of the socket that receives the end of the tubular component. The first and/or second concentric surface may be angled relative to the central axis at an angle θ, wherein, in the most general case, 0 < θ < 90°, and in preferable examples 0 < θ ≤ 60°. For example a suitably tapered socket may be defined by 0 < θ ≤ 45° or 0 < θ ≤ 30°. The angle θ may be chosen depending on parameters such as the wall thickness of the given tubular component and/or the axial length of the end fitting. Shallower angles (i.e. lower values of θ) are preferred for improved tensile strength.

In examples wherein the socket is tapered, the given tubular component will also have respectively tapered outer and/or inner surfaces so to provide the interference fit. Typically a tubular component made of fibre reinforced polymer matrix composite material will comprise a high proportion of fibres that are axially aligned or have a low helical wrap angle. To form the tapered outer and/or inner surfaces, the walls of the tubular component may be cut at an angle and this will expose a large proportion of the axial fibre reinforcement for engagement with the first and second surfaces of the socket. A tapered socket can thereby achieve a much higher degree of engagement with the fibres of the composite material than a straight socket. Furthermore, it is counter-intuitive for the socket to be tapered as this would be expected to make it easier for the given tubular component to pull out of engagement with the end fitting.

In one or more examples of the present disclosure, the socket may comprise an open end arranged to receive an end of the given tubular component, an end portion providing the open end, and splined surface portions providing the first and/or second concentric surfaces, wherein the end portion comprises further first and second lead-in surfaces that are angled to extend radially away from the outer and inner diameters. This means that the end portion does not provide an interference fit with respective outer and inner surfaces of the given tubular component when the component is press fitted into the socket. The end portion may therefore provide an optional flared lead-in to assist insertion of the given tubular component into the socket.

In one or more examples of the present disclosure, the socket may comprise an open end arranged to receive an end of the given tubular component and a base at an opposite end of the socket, wherein the base comprises an undercut having a diameter different to the outer and/or inner diameter defined by the first and second splined surfaces. Such an undercut at the base of the socket can aid assembly, improve the stresses within the end fitting assembly, and provide a place for the collection of debris (produced by tooth self-cutting), and optionally for adhesive. The undercut may take the form of a cavity having non-splined surfaces.

In one or more examples of the present disclosure, the end fitting may be a multi-piece component. For example, the end fitting may be a two-piece component comprising a first component providing the first surface of the socket and a second component providing the second surface of the socket. This may simplify manufacture of the end fitting. In one or more other examples of the present disclosure, the end fitting is a one-piece component. The socket may therefore be formed in a single piece, reducing the part count.

It will be appreciated that the number of splines, the length of the splines, the spacing of the splines, etc. for the first and second surfaces can be chosen depending on the size of the socket and/or the given tubular component. While there is in some examples disclosed a plurality of splines extending along the central axis, this does not mean that the splines are necessarily parallel to the central axis. The splines on the first and/or second surface may, for example, be angled across the central axis, or undulate as they extend along the central axis, or may even extend at least partially helically. A helical arrangement of splines may be used to transmit both torsional and axial load. The longitudinal cutting teeth may therefore be designed such that they are not purely longitudinal.

It will be appreciated that the wall thickness of a given tubular component dictates the custom outer and inner diameters of the socket. In one or more examples, the outer diameter defined by the first surface and the inner diameter defined by the second surface are chosen to provide a predetermined interference fit with respective outer and inner surfaces of the given tubular component when the component is press fitted into the socket. For example, the predetermined interference fit may be set at 0.15-0.2 mm for a given tubular component having a typical wall thickness of 5-6 mm.

The relative angular position, or timing, of the first and second surfaces may be chosen to avoid stress concentrations and optimise weight. Providing the end fitting as a single component allows the timing to be precisely controlled and fixed. For example, the end fitting may be manufactured such that splines on the first surface are not exactly radially opposite splines on the second surface, such that the splines of the first and second surfaces are to some extent interleaved. When assembled with a thin-walled tubular component, this prevents the presence of angularly coincident splines that could reduce the wall thickness of the tubular component below an acceptable level. In some examples at least one spline on the first surface coincides with a flat on the second surface.

There is further provided by the present disclosure an end fitting assembly comprising a tubular component made of fibre reinforced polymer matrix material inserted into the socket of the end fitting.

As is discussed above, in examples wherein the socket is tapered on at least one of the first and second concentric surfaces, the tubular component comprises respectively tapered outer and/or inner surfaces so to provide the interference fit.

The fibre reinforcement may comprise metallic, glass and/or carbon fibres. In one or more examples the tubular component comprises a carbon fibre reinforced polymer (CFRP) composite material. Such materials are inherently corrosion resistant and provide a large weight saving and improved fatigue performance.

Since the end fitting provides a socket with a second surface to support the inner surface of the tubular component, a plug of hoop reinforcement is no longer required. The tubular component may therefore mainly comprise axial fibre reinforcement (at least in an end region that interfaces with the end fitting).

The composite material tubular component may be made using any suitable manufacturing technique. A fibre-reinforced polymer matrix composite material may be formed by braiding, automated fibre placement (AFP), prepreg wrap techniques or pultrusion methods. However in preferred examples the composite material tubular component is a filament wound structure. Filament winding techniques are particularly well-suited for making tubular components from carbon-fibre reinforced polymer (CFRP).

In any of these examples, preferably the composite material is a thermoset material. This means the composite material cannot be reshaped by deformation when press fitted against a splined surface.

In one or more examples of the present disclosure, the end fitting assembly may optionally comprise an adhesive bond between the first surface of the socket and an outer surface of the tubular component, and/or an adhesive bond between the second surface of the socket and an inner surface of the tubular component. It has been found that the debris resulting from the action of the one or more cutting teeth reinforces the adhesive around the mechanical interface formed by the splines to further enhance the stability of the joint. This optional adhesive bond also acts as a sealant to encase the exposed fibres in the cut groove(s) (and potentially any exposed fibres on the end face of the tubular component), providing protection from the external environment. Further details of suitable adhesive bonding materials and techniques maybe found in US 7,874,925, the disclosure of which is hereby incorporated by reference.

There is further provided by the present disclosure a torque transmission/drive shaft comprising a tubular component made of fibre reinforced polymer matrix material and an end fitting as disclosed herein press fitted onto each end. Torque drive shafts are commonly called "torsion shafts" or "torsion tubes"

There is further provided by the present disclosure a method of making a metallic end fitting, as disclosed herein, for a given tubular component.

There is further provided by the present disclosure a method of assembling a torque transmission/drive shaft, comprising: providing a tubular component made of fibre reinforced polymer matrix material; and press fitting a metallic end fitting, as disclosed herein, onto each end of the tubular component.

During assembly, the two internally splined metallic end fittings are simultaneously pushed and press fitted onto opposite ends of the tubular component e.g. through the application of a compressive load of 10-200 kN. The load required for such assembly may depend, for example, upon the outer and inner diameters of the socket, the wall thickness of a given tubular component and/or properties of the splines (e.g. spline length or spacing).

In one or more examples of the present disclosure, the end fitting is made from any suitable metallic material. The end fitting is preferably machined out of a hard, stiff and strong metallic alloy such as corrosion resistant steel alloy.

The present disclosure extends to a metallic end fitting for a given tubular component made of fibre reinforced polymer matrix composite material, the end fitting comprising:
first and second concentric surfaces extending longitudinally along a central axis to form a socket for receiving an end of the tubular component;
the socket having an outer diameter defined by the first surface, and an inner diameter defined by the second surface, wherein the outer diameter and inner diameter are chosen to provide an interference fit with respective outer and inner surfaces of the given tubular component when the component is press fitted into the socket;
the first surface facing radially inwardly and comprising a plurality of splines extending along the central axis, each spline flanked by a pair of troughs extending along either side of the spline and projecting radially outwardly to a diameter greater than the outer diameter, and each spline projecting radially inwardly from the outer diameter, to form a corresponding plurality of longitudinal cutting teeth, adjacent cutting teeth being spaced apart by lands extending circumferentially at the outer diameter; and
the second surface facing radially outwardly and comprising a plurality of splines extending along the central axis, each spline flanked by a pair of troughs extending along either side of the spline and projecting radially inwardly to a diameter less than the inner diameter, and each spline projecting radially outwardly from the inner diameter, to form a corresponding plurality of longitudinal cutting teeth, adjacent cutting teeth being spaced apart by lands extending circumferentially at the inner diameter.

### Detailed Description

One or more non-limiting examples will now be described, by way of example only, and with reference to the accompanying figures, in which:
Figure 1a is an isometric view, Fig. 1b is an enlarged view, and Fig. 1c is a cross-sectional view, of a double splined end fitting comprising a socket according to an example;
Figure 2 is a cut-through sectional view of an end fitting assembly with a composite tube inserted into the socket of the end fitting of Figure 1;
Figure 3 is a cross-sectional view of a double splined end fitting according to another example;
Figure 4a is a cross sectional view of another end fitting assembly with a composite tube inserted into a socket having an undercut;
Figure 4b is a cross sectional view of another end fitting assembly with a composite tube inserted into a socket having an alternative undercut shape;
Figure 5 is a close up view of a splined surface; and
Figure 6 is a cross sectional view of a composite tube with end fitting assemblies press fitted onto both ends.

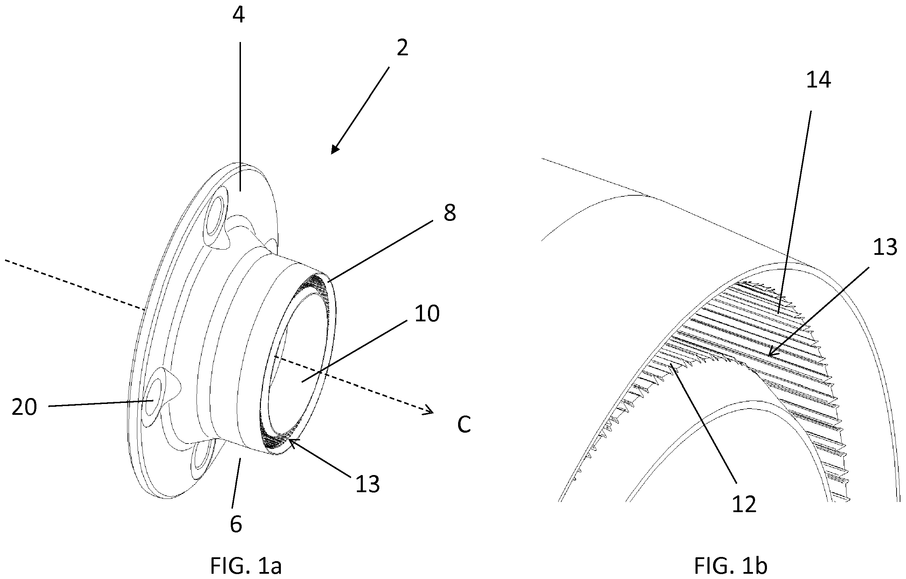

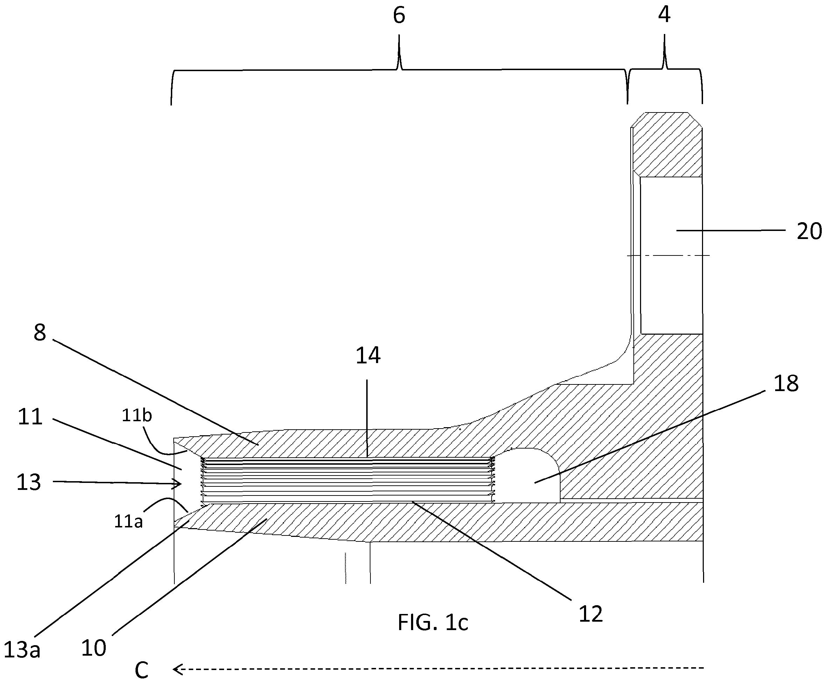

There is seen in Figs. 1a, 1b and 1c an example of a double splined end fitting 2. The metallic end fitting 2 comprises a base portion 4 and a socket portion 6. The socket portion 6 comprises concentrically spaced outer and inner portions 8, 10 which each comprise a cylindrical shell that extends from the base portion 4 in a longitudinal direction parallel to a central axis C. The inner portion 10 is located radially inward of the outer portion 8 such that a socket 13 with an annular cross section is formed, defined by an outer surface 12 of the inner portion 10 that is facing radially outwardly and an inner surface 14 of the outer portion 8 that is facing radially inwardly. The socket 13 has an outer diameter defined by the inner surface 14, an inner diameter defined by the outer surface 12, and a base proximal to the base portion 4. In this example the outer and inner surfaces 12, 14 are parallel to the central axis C, such that the cross section of the socket 13 is consistent along its depth.

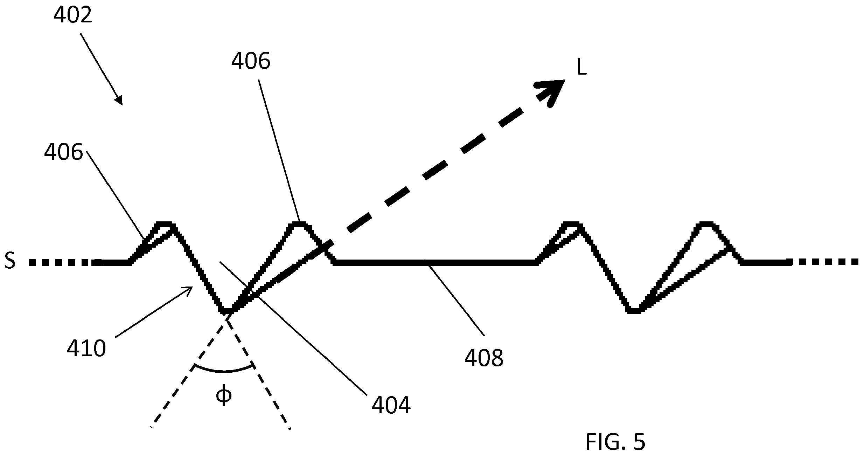

The outer surface 12 is splined, wherein it comprises a plurality of radially and longitudinally extending cutting teeth spaced by longitudinally and circumferentially extending lands. The inner surface 14 is similarly splined. The cutting teeth are shown in in more detail in Figure 5 and described below. Figure 1c shows that the plurality of teeth do not extend the entire depth of the outer and inner portions 8, 10 but instead an undercut 18 is formed at the base of the socket 13 which will also be explained in further detail below.

As is seen most clearly from Fig. 1C, the splined surface portions 12, 14 of the socket 13 do not extend all the way along the length of the socket 13. The socket 13 has an open end 11 arranged to receive a tubular component. The open end 11 is provided by an end portion 13a of the socket 13. In the end portion 13a, inner and outer lead-in surfaces 11a, 11b are angled to extend radially away from the outer and inner diameters defined by the splined surface portions 12, 14. The flared lead-in surfaces 11a, 11b can assist with insertion of a tubular component into the socket 13.

The base portion 4 further comprises connecting holes 20, so that the end fitting 2 may be connected to another component (not shown). The end fitting 2 is formed of a metallic material as a one-piece component.

The splines shown in this figure extend longitudinally, which gives a connection with a tubular component the best torsional strength, although the splines may extend helically (akin to a screw thread) to give improved axial load transmission. Helically extending splines may extend at an angle to the longitudinal direction of less than or equal to 15° although angles up to 89° may be beneficial in some examples.

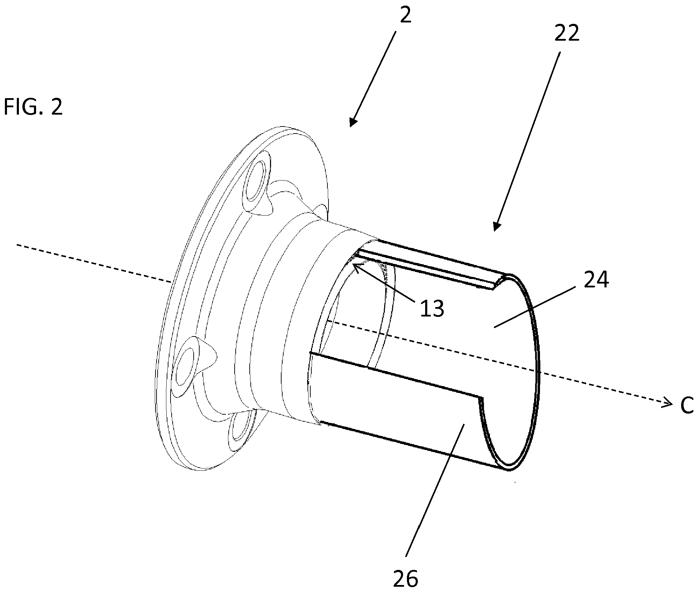

As shown in Figure 2, a fibre reinforced polymer matrix composite material tube 22 may be inserted into the socket 13 to connect the tube 22 to the end fitting 2. The tube 22 comprises an internal cylindrical surface 24 and an external cylindrical surface 26 which have diameters such that an interference fit is formed between the composite tube 22 and the outer and inner surfaces 12, 14 of the socket 13, preventing accidental separation of the tube 22 and the end fitting 2 during use. During assembly, the composite tube 22 is "press fitted" into the socket 13 by applying force in a longitudinal direction (i.e. along the central axis C), and as the tube 22 enters the socket 13, the cutting teeth of the outer and inner surfaces 12, 14 cut longitudinal grooves into the internal and external surfaces 24, 26 of the tube 22. This forms a mechanical locking interface, such that relative rotation of the end fitting 2 and the composite material tube 22 is prevented.

The undercut 18 shown in Figure 1c at the base of the socket 13 serves to collect debris created by the cutting teeth as the composite material tube 22 is inserted into the socket 13. The undercut 18 also serves to reduce stress in the end fitting 2 caused by the interference fit with the composite material tube 22 and prevents any load from being applied to the end of the composite material tube 22, which is often undesirable.

Adhesive may be disposed in the socket 13 before the composite material tube 22 is inserted to increase the strength of the mechanical locking interface. In this case the undercut 18 also serves to collect excess adhesive that may be displaced as the tube 22 is inserted.

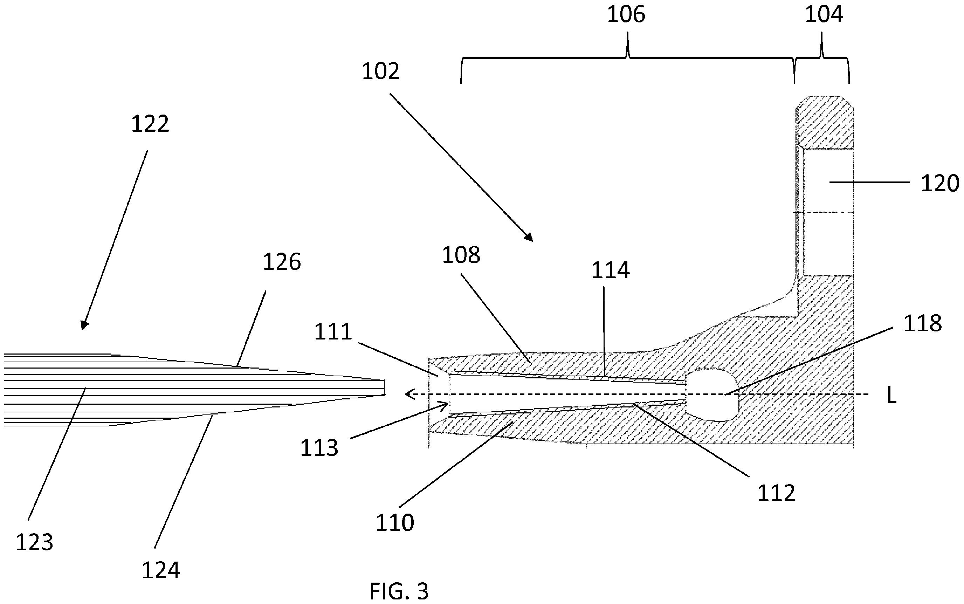

In another example, illustrated in Figure 3, an end fitting 102 comprises a base portion 104 and a socket portion 106. The socket portion 106 comprises concentrically spaced outer and inner portions 108, 110 which each comprise a generally cylindrical shell that extends from the base portion 102 in a longitudinal direction L parallel to a central axis C to an open end 111. The inner portion 110 is located radially inward of the outer portion 108 such that a socket 113 with an annular cross section is formed, defined by an outer surface 112 of the inner portion 110, an inner surface 114 of the outer portion 108. The socket 113 has an outer diameter defined by the inner surface 114, an inner diameter defined by the outer surface 112 and a base proximal to the base portion 104. In this example the outer surface 112 (facing radially outwardly) and the inner surface 114 (facing radially inwardly) are both angled relative to the central axis C, such that the socket 113 tapers inwardly to a narrowest point at its base. It can be seen in Fig. 3 that the surfaces 112, 114 are angled to converge towards the longitudinal direction L that is parallel to the central axis C from the open end 111 of the socket 113 that receives the tube 122. The outer surface 108 and the inner surface 106 are splined, and the end fitting 102 comprises an undercut 118 at the base of the socket 113, as generally seen in the previous example but enlarged in this example.

A wall of a fibre reinforced polymer matrix composite material tube 122 is also shown in Figure 3. The composite material tube 122 comprises fibres 123 that run longitudinally within its walls, and the tubular walls are tapered to match the taper of the socket 113 such that the ends of some of the fibres 123 are exposed at tapered internal and external surfaces 124, 126 of the tube 122. Tapering of the tube walls may be achieved by grinding away material from a composite material tube with straight walls.

During assembly, the composite material tube 122 is inserted into the socket 113. As the tapered surfaces 124, 126 match the socket 113, the composite material tube 122 is press fitted into an interference fit with the outer and inner surfaces 112, 114. The cutting teeth of the outer and inner surfaces 112, 114 cut longitudinal grooves into the tube 122 to form a mechanical locking interface which prevents relative rotation of the end fitting 102 and the composite tube 122.

As in the previous example, the undercut 118 at the base of the socket 113 serves to reduce stress in the end fitting 102 and to collect debris created by the cutting teeth as the composite material tube 122 is inserted into the socket 113. Also as in the previous example, adhesive may be disposed in the socket 113 before the composite tube 122 is inserted and the undercut 118 may serve to collect any excess adhesive.

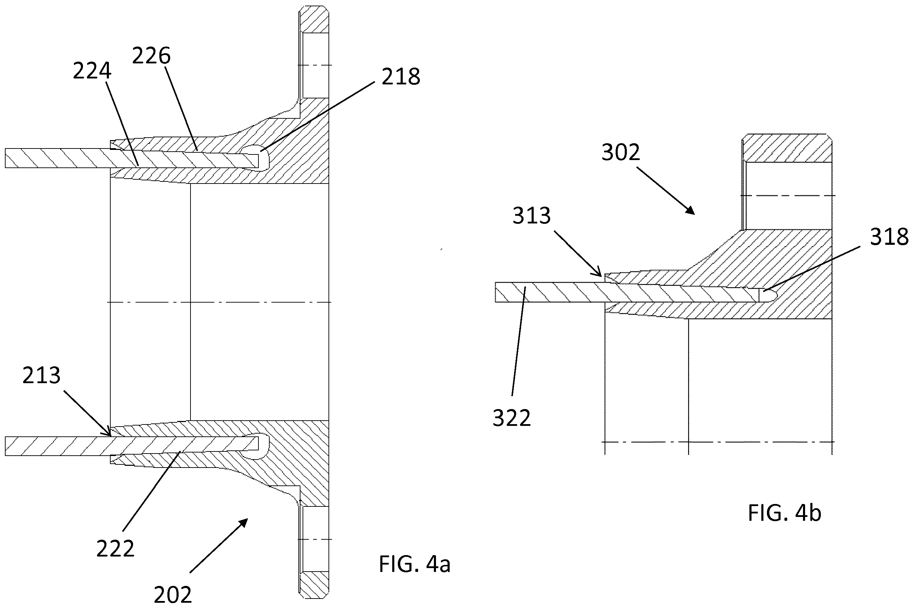

Figure 4a is a cross section of an entire metallic end fitting 202 when assembled with a composite material tube 222. In this example the tube 222 comprises an external surface 226 that is tapered and an internal surface 224 that is straight, i.e. a tube 222 with a single taper rather than the double taper seen in Fig. 3. The end fitting 202 comprises a socket 213 with matching concentric surfaces, one being straight and the other tapered. Of course the surfaces could be reversed. The end fitting 202 also comprises a large undercut 218. Otherwise the end fitting 202 is substantially the same as previously described and the tube 222 is press fitted into the socket 213 in the same way.

Figure 4b illustrates an alternative example of a metallic end fitting 302 comprising a socket 313 with a smaller undercut 318 at its base, wherein the undercut 318 comprises a semi-circular void. This profile of this undercut 318 may be easier to manufacture than alternatives, while still providing room for debris and/or adhesive when a composite material tube 322 is press fitted into the socket 313.

As described above, in examples of the present disclosure the concentric surfaces of the socket provided by the end fitting are splined. Figure 5 is a close up cross section of a splined surface 402 according to the present disclosure. The surface 402 extends generally along a surface plane S and comprises a repeating pattern of splines 404, troughs 406 and flats 408, each of which extends in a longitudinal direction L (e.g. corresponding to the central axis C in Figure 1a). Within the repeating pattern, each spline 404 projects out from the surface plane S and is flanked by a pair of troughs 406 which are recessed into the surface plane S. Each spline 404 and its flanking troughs 406 form a longitudinal cutting tooth 410, and adjacent cutting teeth 410 are separated by a flat 408, which does not project from the surface plane S. The cutting teeth 410 typically comprise a cutting angle ϕ of between 5 and 85°. Although the surface plane S is schematically shown as a straight plane in Fig. 5, it is of course an arcuate plane when the splined surface 402 is a concentric surface of a socket in one of the end fitting disclosed herein. The longitudinal direction L then extends along the central axis C, in a parallel direction for a straight surface or an angled direction for a tapered surface.

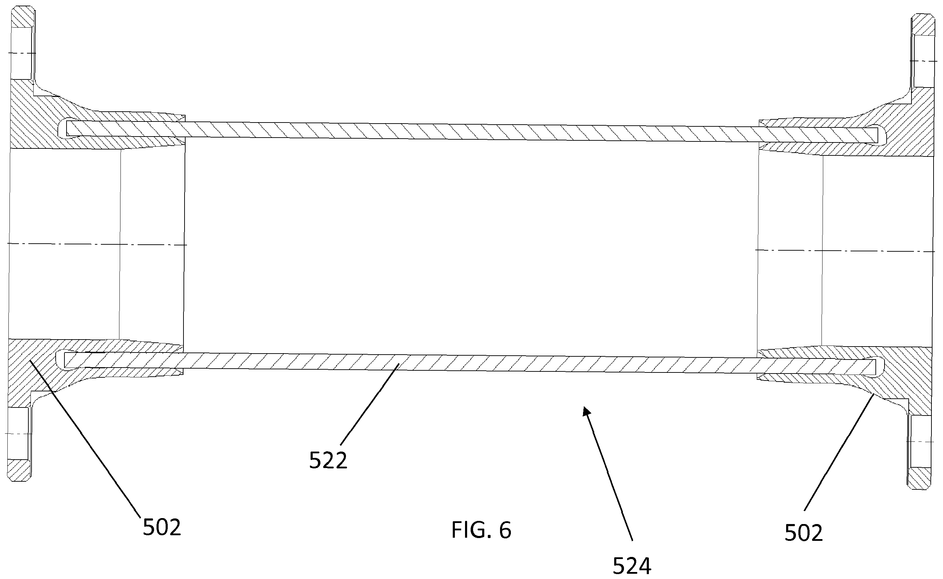

Figure 6 shows a fully assembled composite material torque transmission/drive shaft 524 comprising a fibre reinforced polymer matrix material tube 522 with metallic end fittings 502 press fitted onto both ends. The end fittings 502 are connected to the composite tube 522 as described herein, with the composite material tube 522 being press fitted into a splined socket formed in each end fitting 502.

In the illustrated example, the end fittings 502 are identical, but in similar examples where connections are required on both ends of a composite material tube 522, dissimilar end fittings may be employed, or one metallic end fitting according to the present disclosure may be used on a first end of the composite tube, with a different connection means used at the other end

## Claims

1. A metallic end fitting (2, 102, 202, 302, 502) for a given tubular component (22, 122, 222, 322, 522) made of fibre reinforced polymer matrix composite material, the end fitting (2, 102, 202, 302, 502) comprising:
first and second concentric surfaces (14, 114; 12, 112) extending longitudinally along a central axis (C) to form a socket (13, 113, 213, 313) for receiving an end of the tubular component (22, 122, 222, 322, 522);
the socket (13, 113, 213, 313) having an outer diameter defined by the first surface (14, 114), and an inner diameter defined by the second surface (12,112), wherein the outer diameter and inner diameter are chosen to provide an interference fit with respective outer and inner surfaces (26, 126, 226; 24, 124, 224) of the given tubular component (22, 122, 222, 322, 522) when the component (22, 122, 222, 322, 522) is press fitted into the socket (13, 113, 213, 313);
**characterised in that** each of the first and second concentric surfaces (14, 114; 12, 112) comprises one or more longitudinal cutting teeth (410).

2. The metallic end fitting (2, 102, 202, 302, 502) of claim 1, wherein the one or more cutting teeth (410) comprise a plurality of axial or helical splines (404).

3. The metallic end fitting (2, 102, 202, 302, 502) of claim 1 or 2, wherein:
the first surface (14, 114) faces radially inwardly and comprises a plurality of splines (404) extending along the central axis (C), each spline (404) flanked by a pair of troughs (406) extending along either side of the spline (404) and projecting radially outwardly to a diameter greater than the outer diameter of the socket (13, 113, 213, 313), and each spline (404) projecting radially inwardly from the outer diameter of the socket (13, 113, 213, 313), to form a corresponding plurality of longitudinal cutting teeth (410), adjacent cutting teeth being spaced apart by lands (408) extending circumferentially at the outer diameter of the socket (13, 113, 213, 313); and/or
the second surface (12, 112) facing radially outwardly and comprising a plurality of splines (404) extending along the central axis (C), each spline (404) flanked by a pair of troughs (406) extending along either side of the spline (404) and projecting radially inwardly to a diameter less than the inner diameter of the socket (13, 113, 213, 313), and each spline (404) projecting radially outwardly from the inner diameter of the socket (13, 113, 213, 313), to form a corresponding plurality of longitudinal cutting teeth (410), adjacent cutting teeth (410) being spaced apart by lands (408) extending circumferentially at the inner diameter of the socket (13, 113, 213, 313).

4. The metallic end fitting (102, 202, 302) of any preceding claim, wherein at least one of the first and second concentric surfaces (114; 112) is angled relative to the central axis (C).

5. The metallic end fitting (102) of claim 4, wherein both the first and second surfaces (114, 112) are angled relative to the central axis (C) to form a tapered socket (113, 213, 313).

6. The metallic end fitting (2) of any of claims 1-3, wherein the first and second concentric surfaces (14, 12) are parallel to the central axis (C).

7. The metallic end fitting (2,102) of any preceding claim, wherein the socket (13, 113, 213) comprises:
an end portion (13a) providing an open end (11, 111) arranged to receive an end of the given tubular component (22,122), and
splined surface portions providing the first and second concentric surfaces (14, 114; 12, 112),
wherein the end portion (13a) comprises further first and second lead-in surfaces (11a; 11b) that are angled to extend radially away from the outer and inner diameters of the socket (13, 113).

8. The metallic end fitting (2, 102, 202, 502) of any preceding claim, wherein the socket (13, 113, 213) comprises an open end (11, 111) arranged to receive an end of the given tubular component (22, 122, 222, 522) and a base at an end opposite to the open end (11, 111) of the socket (13, 113, 213), wherein the base comprises an undercut (18, 118) having a diameter different to the outer and/or inner diameter of the socket (13, 113, 213).

9. The metallic end fitting (2, 102, 202, 302, 502) of any preceding claim, wherein the end fitting (2, 102, 202, 302, 502) is a one-piece component.

10. An end fitting assembly (524) comprising:
a tubular component (22, 122, 222, 322, 522) made of fibre reinforced polymer matrix material inserted into the socket (13, 113, 213, 313) of an end fitting (2, 102, 202, 302, 502) according to any preceding claim.

11. An end fitting assembly (524) comprising:
a tubular component (22, 122, 222, 322, 522) made of fibre reinforced polymer matrix material inserted into the socket (13, 113, 213, 313) of an end fitting (2, 102, 202, 302, 502) according to any of claims 1-5, or any of claims 7-9 when not dependent on claim 6,
wherein the socket (113, 213, 313) is tapered on at least one of the first and second concentric surfaces (114, 112) and the tubular component (122, 222, 322, 522) comprises tapered outer and/or inner surfaces (126, 226; 124, 224) inserted into the tapered socket (113, 213, 313).

12. The end fitting assembly (524) of claim 10 or 11, wherein the end fitting assembly (524) comprises an adhesive bond between the first surface (14, 214) of the socket (13, 113, 213, 313) and an outer surface (26, 126, 226) of the tubular component (22, 122, 222, 322, 522), and/or an adhesive bond between the second surface (12, 112) of the socket (13, 113, 213, 313) and an inner surface (24, 124, 224) of the tubular component (22, 122, 222, 322, 522).

13. A method of assembling a torque transmission/drive shaft (524), comprising:
providing a tubular component (522) made of fibre reinforced polymer matrix material; and
press fitting a metallic end fitting (502) according to any of claims 1-9 onto each end of the tubular component (522).

14. A torque transmission/drive shaft (524) comprising:
a tubular component (522) made of fibre reinforced polymer matrix material and an end fitting (502) according to any of claims 1-9 press fitted onto each end.

## Patentansprüche

1. Metallisches Endstück (2, 102, 202, 302, 502) für eine gegebene röhrenförmige Komponente (22, 122, 222, 322, 522), die aus einem faserverstärkten Polymermatrixverbundmaterial besteht, wobei das Endstück (2, 102, 202, 302, 502) Folgendes umfasst:
eine erste und eine zweite konzentrische Fläche (14, 114; 12, 112), die sich in Längsrichtung entlang einer Zentralachse (C) erstrecken, um einen Sockel (13, 113, 213, 313) zum Aufnehmen eines Endes der röhrenförmigen Komponente (22, 122, 222, 322, 522) zu bilden;
wobei der Sockel (13, 113, 213, 313) einen Außendurchmesser, der durch die erste Fläche (14, 114) definiert ist, und einen Innendurchmesser, der durch die zweite Fläche (12, 112) definiert ist, aufweist, wobei der Außendurchmesser und der Innendurchmesser ausgewählt werden, um einen Presssitz an der jeweiligen Außen- und Innenfläche (26, 126, 226; 24, 124, 224) der gegebenen röhrenförmigen Komponente (22, 122, 222, 322, 522) bereitzustellen, wenn die Komponente (22, 122, 222, 322, 522) in den Sockel (13, 113, 213, 313) presseingepasst wird;
**dadurch gekennzeichnet, dass**
sowohl die erste als auch die zweite konzentrische Fläche (14, 114; 12, 112) einen oder mehrere längsgerichtete Schneidezähne (410) umfassen.

2. Metallisches Endstück (2, 102, 202, 302, 502) nach Anspruch 1, wobei der eine oder die mehreren Schneidezähne (410) eine Vielzahl von axialen oder spiralförmigen Kerben (404) umfassen.

3. Metallisches Endstück (2, 102, 202, 302, 502) nach Anspruch 1 oder 2, wobei:
die erste Fläche (14, 114) radial nach innen zeigt und eine Vielzahl von Kerben (404) umfasst, die sich entlang der Zentralachse (C) erstreckt, wobei jede Kerbe (404) durch ein Paar Vertiefungen (406) flankiert wird, das sich entlang beider Seiten der Kerbe (404) erstreckt und radial nach außen zu einem Durchmesser ragt, der größer als der Außendurchmesser des Sockels (13, 113, 213, 313) ist, und wobei jede Kerbe (404) von dem Außendurchmesser des Sockels (13, 113, 213, 313) radial nach innen ragt, um eine entsprechende Vielzahl von längsgerichteten Schneidezähnen (410) zu bilden, wobei benachbarte Schneidezähne durch Flachabschnitte (408) beabstandet sind, die sich umlaufend an dem Außendurchmesser des Sockels (13, 113, 213, 313) erstrecken; und/oder
wobei die zweite Fläche (12, 112) radial nach außen zeigt und eine Vielzahl von Kerben (404) umfasst, die sich entlang der Zentralachse (C) erstreckt, wobei jede Kerbe (404) durch ein Paar Vertiefungen (406) flankiert wird, das sich entlang beider Seiten der Kerbe (404) erstreckt und radial nach innen zu einem Durchmesser ragt, der kleiner als der Innendurchmesser des Sockels (13, 113, 213, 313) ist, und wobei jede Kerbe (404) von dem Innendurchmesser des Sockels (13, 113, 213, 313) radial nach außen ragt, um eine entsprechende Vielzahl von längsgerichteten Schneidezähnen (410) zu bilden, wobei benachbarte Schneidezähne (410) durch Flachabschnitte (408) beabstandet sind, die sich umlaufend an dem Innendurchmesser des Sockels (13, 113, 213, 313) erstrecken.

4. Metallisches Endstück (102, 202, 302) nach einem der vorstehenden Ansprüche, wobei mindestens eine der ersten und der zweiten konzentrischen Fläche (114; 112) in Bezug auf die Zentralachse (C) angewinkelt ist.

5. Metallisches Endstück (102) nach Anspruch 4, wobei sowohl die erste als auch die zweite Fläche (114, 112) in Bezug auf die Zentralachse (C) angewinkelt sind, um einen konischen Sockel (113, 213, 313) zu bilden.

6. Metallisches Endstück (2) nach einem der Ansprüche 1-3, wobei die erste und die zweite konzentrische Fläche (14, 12) parallel zu der Zentralachse (C) sind.

7. Metallisches Endstück (2, 102) nach einem der vorstehenden Ansprüche, wobei der Sockel (13, 113, 213) Folgendes umfasst:
einen Endabschnitt (13a), der ein offenes Ende (11, 111) bereitstellt, das angeordnet ist, ein Ende der gegebenen röhrenförmigen Komponente (22, 122) aufzunehmen, und
verzahnte Flächenabschnitte, die die erste und die zweite konzentrische Fläche (14, 114; 12, 112) bereitstellen,
wobei der Endabschnitt (13a) ferner eine erste und eine zweite nach innen führende Fläche (11a; 11b) umfasst, die angewinkelt sind, um sich von dem Innen- und Außendurchmesser des Sockels (13, 113) radial weg zu erstrecken.

8. Metallisches Endstück (2, 102, 202, 502) nach einem der vorstehenden Ansprüche, wobei der Sockel (13, 113, 213) ein offenes Ende (11, 111), das angeordnet ist, um ein Ende der gegebenen röhrenförmigen Komponente (22, 122, 222, 522) aufzunehmen, und eine Basis an einem Ende gegenüber des offenen Endes (11, 111) des Sockels (13, 113, 213) umfasst, wobei die Basis eine Unterschneidung (18, 118) mit einem Durchmesser umfasst, der sich von dem Außen- und/oder Innendurchmesser des Sockels (13, 113, 213) unterscheidet.

9. Metallisches Endstück (2, 102, 202, 302, 502) nach einem der vorstehenden Ansprüche, wobei das Endstück (2, 102, 202, 302, 502) eine einstückige Komponente ist.

10. Endstückbaugruppe (524), die Folgendes umfasst:
eine röhrenförmige Komponente (22, 122, 222, 322, 522), die aus einem faserverstärkten Polymermatrixverbundmaterial besteht und in den Sockel (13, 113, 213, 313) eines Endstücks (2, 102, 202, 302, 502) nach einem der vorstehenden Ansprüche eingefügt ist.

11. Endstückbaugruppe (524), die Folgendes umfasst:
eine röhrenförmige Komponente (22, 122, 222, 322, 522), die aus einem faserverstärkten Polymermatrixverbundmaterial besteht und in den Sockel (13, 113, 213, 313) eines Endstücks (2, 102, 202, 302, 502) nach einem der Ansprüche 1-5 oder, wenn nicht abhängig von Anspruch 6, nach einem der Ansprüche 7-9 eingefügt ist,
wobei der Sockel (113, 213, 313) an mindestens einer der ersten und der zweiten konzentrischen Fläche (114, 112) konisch ist und die röhrenförmige Komponente (122, 222, 322, 522) eine konische Außen- und/oder Innenfläche (126, 226; 124, 224) umfasst, die in den konischen Sockel (113, 213, 313) eingefügt ist.

12. Endstückbaugruppe (524) nach Anspruch 10 oder 11, wobei die Endstückbaugruppe (524) eine Klebeverbindung zwischen der ersten Fläche (14, 214) des Sockels (13, 113, 213, 313) und einer Außenfläche (26, 126, 226) der röhrenförmigen Komponente (22, 122, 222, 322, 522) und/oder eine Klebeverbindung zwischen der zweiten Fläche (12, 112) des Sockels (13, 113, 213, 313) und einer Innenfläche (24, 124, 224) der röhrenförmigen Komponente (22, 122, 222, 322, 522) umfasst.

13. Verfahren zum Zusammenbauen einer Drehmomentübertragungs-/Antriebswelle (524), das Folgendes umfasst:
Bereitstellen einer röhrenförmigen Komponente (522), die aus einem faserverstärkten Polymermatrixverbundmaterial besteht; und
Presseinpassen eines metallischen Endstücks (502) nach einem der Ansprüche 1-9 an jedes Ende der röhrenförmigen Komponente (522).

14. Drehmomentübertragungs-/Antriebswelle (524), die Folgendes umfasst:
eine röhrenförmige Komponente (522), die aus einem faserverstärkten Polymermatrixverbundmaterial besteht, und ein Endstück (502) nach einem der Ansprüche 1-9, das an jedem Ende presseingepasst ist.

## Revendications

1. Raccord d'extrémité métallique (2, 102, 202, 302, 502) pour un composant tubulaire donné (22, 122, 222, 322, 522) constitué de matériau composite à matrice polymère renforcé de fibres, le raccord d'extrémité (2, 102, 202, 302, 502) comprenant :
des première et seconde surfaces concentriques (14, 114 ; 12, 112) s'étendant longitudinalement le long d'un axe central (C) pour former une douille (13, 113, 213, 313) destinée à recevoir une extrémité du composant tubulaire (22, 122, 222, 322, 522) ;
la douille (13, 113, 213, 313) ayant un diamètre extérieur défini par la première surface (14, 114), et un diamètre intérieur défini par la seconde surface (12, 112), dans lequel le diamètre extérieur et le diamètre intérieur sont choisis pour fournir un ajustement serré avec les surfaces extérieure et intérieure respectives (26, 126, 226 ; 24, 124, 224) du composant tubulaire donné (22, 122, 222, 322, 522) lorsque le composant (22, 122, 222, 322, 522) est ajusté par pression dans la douille (13, 113, 213, 313) ;
**caractérisé en ce que**
chacune des première et seconde surfaces concentriques (14, 114 ; 12, 112) comprend une ou plusieurs dents coupantes longitudinales (410).

2. Raccord d'extrémité métallique (2, 102, 202, 302, 502) selon la revendication 1, dans lequel les une ou plusieurs dents coupantes (410) comprennent une pluralité de cannelures axiales ou hélicoïdales (404).

3. Raccord d'extrémité métallique (2, 102, 202, 302, 502) selon la revendication 1 ou 2, dans lequel :
la première surface (14, 114) est tournée radialement vers l'intérieur et comprend une pluralité de cannelures (404) s'étendant le long de l'axe central (C), chaque cannelure (404) flanquée d'une paire de creux (406) s'étendant le long de chaque côté de la cannelure (404) et faisant saillie radialement vers l'extérieur à un diamètre supérieur au diamètre extérieur de la douille (13, 113, 213, 313), et chaque cannelure (404) faisant saillie radialement vers l'intérieur depuis le diamètre extérieur de la douille (13, 113, 213, 313), pour former une pluralité correspondante de dents coupantes longitudinales (410), les dents coupantes adjacentes étant espacées par des plages (408) s'étendant circonférentiellement au niveau du diamètre extérieur de la douille (13, 113, 213, 313) ; et/ou
la seconde surface (12, 112) est tournée radialement vers l'extérieur et comprend une pluralité de cannelures (404) s'étendant le long de l'axe central (C), chaque cannelure (404) flanquée d'une paire de creux (406) s'étendant le long de chaque côté de la cannelure (404) et faisant saillie radialement vers l'intérieur à un diamètre inférieur au diamètre intérieur de la douille (13, 113, 213, 313), et chaque cannelure (404) faisant saillie radialement vers l'extérieur depuis le diamètre intérieur de la douille (13, 113, 213, 313), pour former une pluralité correspondante de dents coupantes longitudinales (410), les dents coupantes adjacentes (410) étant espacées par des plages (408) s'étendant circonférentiellement au niveau du diamètre intérieur de la douille (13, 113, 213, 313).

4. Raccord d'extrémité métallique (102, 202, 302) selon une quelconque revendication précédente, dans lequel au moins une des première et seconde surfaces concentriques (114 ; 112) est inclinée par rapport à l'axe central (C).

5. Raccord d'extrémité métallique (102) selon la revendication 4, dans lequel à la fois les première et seconde surfaces (114, 112) sont inclinées par rapport à l'axe central (C) pour former une douille effilée (113, 213, 313).

6. Raccord d'extrémité métallique (2) selon l'une quelconque des revendications 1 à 3, dans lequel les première et seconde surfaces concentriques (14, 12) sont parallèles à l'axe central (C).

7. Raccord d'extrémité métallique (2, 102) selon une quelconque revendication précédente, dans lequel la douille (13, 113, 213) comprend :
une partie d'extrémité (13a) fournissant une extrémité ouverte (11, 111) agencée pour recevoir une extrémité du composant tubulaire donné (22, 122), et
des parties de surface cannelées fournissant les première et seconde surfaces concentriques (14, 114 ; 12, 112),
dans lequel la partie d'extrémité (13a) comprend d'autres première et seconde surfaces d'entrée (11a ; 11b) qui sont inclinées pour s'étendre radialement à l'écart des diamètres extérieur et intérieur de la douille (13, 113).

8. Raccord d'extrémité métallique (2, 102, 202, 502) selon une quelconque revendication précédente, dans lequel la douille (13, 113, 213) comprend une extrémité ouverte (11, 111) agencée pour recevoir une extrémité du composant tubulaire donné (22, 122, 222, 522) et une base au niveau d'une extrémité opposée à l'extrémité ouverte (11, 111) de la douille (13, 113, 213), dans lequel la base comprend une contre-dépouille (18, 118) ayant un diamètre différent du diamètre extérieur et/ou intérieur de la douille (13, 113, 213).

9. Raccord d'extrémité métallique (2, 102, 202, 302, 502) selon une quelconque revendication précédente, dans lequel le raccord d'extrémité (2, 102, 202, 302, 502) est un composant monobloc.

10. Ensemble de raccord d'extrémité (524) comprenant :
un composant tubulaire (22, 122, 222, 322, 522) constitué de matériau à matrice polymère renforcé de fibres inséré dans la douille (13, 113, 213, 313) d'un raccord d'extrémité (2, 102, 202, 302, 502) selon une quelconque revendication précédente.

11. Ensemble de raccord d'extrémité (524) comprenant :
un composant tubulaire (22, 122, 222, 322, 522) constitué de matériau à matrice polymère renforcé de fibres inséré dans la douille (13, 113, 213, 313) d'un raccord d'extrémité (2, 102, 202, 302, 502) selon l'une quelconque des revendications 1 à 5 ou l'une quelconque des revendications 7 à 9 lorsqu'elles ne dépendent pas de la revendication 6,
dans lequel la douille (113, 213, 313) est effilée sur au moins une des première et seconde surfaces concentriques (114, 112) et le composant tubulaire (122, 222, 322, 522) comprend des surfaces extérieure et/ou intérieure effilées (126, 226 ; 124, 224) insérées dans la douille effilée (113, 213, 313).

12. Ensemble de raccord d'extrémité (524) selon la revendication 10 ou 11, dans lequel l'ensemble de raccord d'extrémité (524) comprend une liaison adhésive entre la première surface (14, 214) de la douille (13, 113, 213, 313) et une surface extérieure (26, 126, 226) du composant tubulaire (22, 122, 222, 322, 522), et/ou une liaison adhésive entre la seconde surface (12, 112) de la douille (13, 113, 213, 313) et une surface intérieure (24, 124, 224) du composant tubulaire (22, 122, 222, 322, 522).

13. Procédé d'assemblage d'un arbre de transmission/d'entraînement de couple (524), comprenant :
la fourniture d'un composant tubulaire (522) constitué de matériau à matrice polymère renforcé de fibres ; et
l'ajustement par pression d'un raccord d'extrémité métallique (502) selon l'une quelconque des revendications 1 à 9 sur chaque extrémité du composant tubulaire (522).

14. Arbre de transmission/d'entraînement de couple (524) comprenant :
un composant tubulaire (522) constitué de matériau à matrice polymère renforcé de fibres et d'un raccord d'extrémité (502) selon l'une quelconque des revendications 1 à 9 ajusté par pression sur chaque extrémité.
